# EUROPEAN PATENT APPLICATION

(11) **EP 1 363 213 A1**
(43) Date of publication of application: **19.11.2003**
(21) Application number: 02700612.1
(22) Date of filing: 20.02.2002
(51) Int. Cl.: G06F 17/60

(54) **ELECTRONIC SETTLEMENT SYSTEM AND ELECTRONIC SETTLEMENT METHOD**

(30) Priority: 20.02.2001 JP 2001044357; 19.02.2002 JP 2002042264
(71) Applicant: Sony Computer Entertainment Inc., Tokyo 107-0052 (JP)
(72) Inventor: KAGIWADA, Yutaka, c/o SONY COMPUTER ENTERTAINMENT, Minato-ku, Tokyo 107-0052 (JP); OKADA, Toyoshi, c/o SONY COMPUTER ENTERTAINMENT, Minato-ku, Tokyo 107-0052 (JP)
(74) Representative: Müller, Frithjof E., Dipl.-Ing.
(86) International application number: JP0201451
(87) International publication number: WO02067165

(57) **Abstract**

A user purchases a prepaid card (or optical disc 9) made by a management and enters to a client terminal apparatus an SC-ID which is a unique identification number assigned thereto. The client terminal 1 sends to a network-based master server apparatus a unique client ID of the client terminal apparatus and a unique MC-ID of a memory card together with the SC-ID. The master server apparatus stores as a combination of the MC-ID and client ID a prepaid amount that corresponds to the SC-ID. Then, in order to provide services, the master server apparatus identifies the user that receives the services from the MC-ID and client ID and carries out a process in which the amount for the provided service is charged to the user's prepaid amount so as to provide service. Accordingly, shifting to a secure device the paying function of a medium that is used for paying enables network-based electronic settlement.

## Description

### TECHNICAL FIELD

The present invention relates to an electronic settlement system, a recording medium having recorded therein a information processing program of a terminal apparatus, a recording medium having recorded therein an information processing program of a management apparatus, an information processing program of a terminal apparatus, an information processing program of a management apparatus and electronic settlement method, all of which are suitable for applying to net businesses that utilize, for example, a network such as the Internet.

### BACKGROUND ART

Presently, net business sites, whereat users, for example, purchase desired products, contents or the like by accessing retail sites via a network such. as the Internet, have been popularized.

There are many cases where settlements at such net business sites are normally carried out using a credit card the user possesses. Specifically, in the case of conducting a settlement by credit card, the user selects the desired products, contents or the like upon a screen for selecting products, contents or the like and at enters the card number of his/her possessing credit card and the name and the like thereof upon a screen for entering payment information. Accordingly, the products selected by the user are sent later by mail or contents are downloadable on the spot; the bill will be paid in the manner of withdrawing from the bank account of the registered name corresponding to the card number the user enters.

However, presently, users that are able to possess credit cards are limited to economically independent users, whereby children and the like that do not have paying capability cannot possess credit cards. Therefore, there is a problem where users such as children that cannot possess credit cards have difficulty in utilizing net business sites.

The present invention was proposed to solve the foregoing problems, and an object thereof resides in that providing an electronic settlement system, a recording medium having recorded therein a information processing program of a terminal apparatus, a recording medium having recorded therein an information processing program of a management apparatus, an information processing program of a terminal apparatus, an information processing program of a management apparatus and electronic settlement method, all of which enable every user to use a electronic settlement on a network without limitation of users.

### DISCLOSURE OF THE INVENTION

According to the present invention, when at least a unique medium identification number assigned to a medium and a unique device identification number assigned to a device are sent to a management apparatus from a terminal apparatus, the management apparatus, based upon the device identification number sent from the terminal apparatus, carries out management of paying money, which is possible with a medium having the medium identification number.

Namely, on the management apparatus side, the medium identification number of the medium the user possesses is managed in the manner of corresponding it with the device identification number of the device the user possesses so as to carry out management of paying money, which is possible with the medium that user possesses, when the management apparatus provides the user with the service.

Then, using, for example, a prepaid card and the like of a prepaid method as this medium allows users that cannot possess credit cards to utilize net business sites.

### BRIEF DESCRIPTION OF THE DRAWINGS

FIG. 1 is a block diagram of an electronic settlement system of a first embodiment to which the present invention is applied;
FIG. 2 is a diagram schematically showing information that is stored in a first database of a master server apparatus, which configures the electronic settlement system;
FIG. 3 is a diagram schematically showing information that is stored in a second database of the master server apparatus, which configures the electronic settlement system;
FIG. 4 is a flowchart for describing the payment procedure when a prepaid card is used;
FIG. 5 is a flowchart for describing the payment procedure when an optical disc is used;
FIG. 6 is a flowchart for describing the steps of a charge process in the electronic settlement system;
FIG. 7 is a block diagram of an electronic settlement system of a second embodiment to which the present invention is applied;
FIG. 8 is a flowchart for describing a charge process with a paying method that combines payment by pre-payment and payment by credit card.

### BEST MODE FOR CARRYING OUT THE INVENTION

The present invention may be applied to an electronic settlement system which allows for pre-payment with, for example, a prepaid card or prepaid disc, and carries out distributing services of contents and the like within the limits of this paid amount.

With such electronic settlement system, the system may be structured by using a "public key encryption method" or a "common key encryption method ("private key encryption method")"or the like.

The "public key encryption method" is an encryption method for performing the encryption and decryption of to-be-sent/received information using two different keys comprised of a public key and private key.

The "common key encryption method" is an encryption method for the sending side and receiving side to perform the encryption and decryption of to-be-sent/received information using a common private key.

In the following, this electronic settlement system will be described in the case where the former "public key" is applied thereto as a representative of both types.

It should be noted that transmission/reception of information described in the following explanation is performed with an encryption method such as SSL (Secure Sockets Layer) and the like as long as it is not specified.

### First Embodiment

### System Configuration of Electronic Settlement System

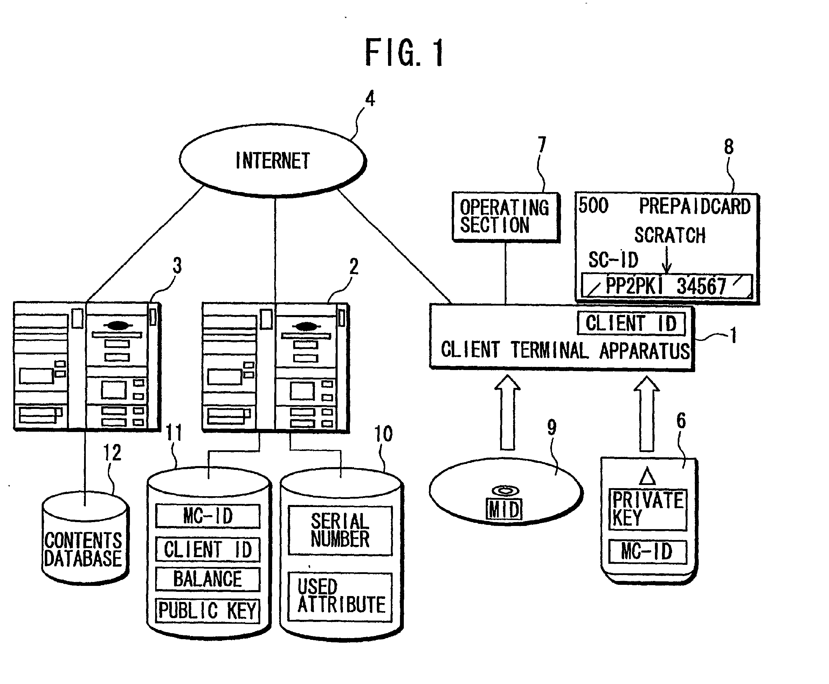

FIG. 1 is a block diagram of an electronic settlement system, which is the first embodiment of the present invention, using the "public key encryption method". As can be understood from FIG. 1, the electronic settlement system of the first embodiment includes a client terminal apparatus 1 such as a video game machine with a network-linking function and a video game executing function or a personal computer with a network-linking function.

Furthermore, this electronic settlement system includes a master server apparatus 2, which manages the electronic settlement system, and a contents server apparatus 3, which performs distribution services of digital contents such as game contents of video games, movie contents, music contents and the like.

This electronic settlement system is configured with the client terminal apparatus 1, master server apparatus 2, and contents server apparatus 3, which are mutually linked to one another via a predetermined network such as Internet 4 and the like.

### Configuration of Client Terminal Apparatus

A unique identification number (client ID) different for every respective client terminal apparatus is assigned to the client terminal apparatus 1. This client ID is stored in a semiconductor memory such as a MASK ROM and the like. This client ID is read out from the MASK ROM by the CPU of the client terminal apparatus 1 when communication is established between master server apparatus 2 later described and the client terminal apparatus 1. The CPU encrypts this client ID based on a predetermined private key stored in a memory card 6 described below so as to send it to the master server apparatus 2.

The memory card 6 is configured of, for example, several to tens of MB flash memory, and is made to be loaded into client terminal apparatus 1. This memory card 6, similarly to the aforementioned client terminal apparatus 1, is assigned with an identification number (MC-ID) that is different for every respective memory card.

Furthermore, of the public key and private key, which allow for the "public key" encryption method, the "private key (or public key)" is stored in this memory card 6. The client terminal apparatus 1 encrypts information by using the private key stored within the memory card 6 and sends it to the master server apparatus 2.

Furthermore, an operating section 7 is connected to this client terminal apparatus 1. The operating section 7, in the case where the client terminal apparatus 1 is a video game machine, is equivalent to a controller that performs manipulation of characters and the like in the video games.

Furthermore, in the case where the client terminal apparatus 1 is a personal computer, it is one equivalent to an input device such as a keyboard or mouse that performs letter input and the like.

In the case of this electronic settlement system, the fact that the user purchases a prepaid card 8 or a recording medium used for pre-payment (in this example, it is optical disc 9; however, it may also be a semiconductor memory or magnetic disc.) means that payment to this electronic settlement system is carried out.

The Prepaid card 8 is printed with an assigned unique identification number (SC-ID) that is different for every respective prepaid card. A numeral (e.g., pp2pki34567 in the example shown in FIG. 1) obtained by encrypting, for example, the serial number of each prepaid card 8 with the public key (or private key) that the master server apparatus 2 has, may be printed as such SC-ID. Furthermore, the prepaid card 8 is structured such that at least the printed portion of this SC-ID is coated with a coating material so as for the printed SC-ID not to be visible.

The coating material that coats this SC-ID may be scratched off with a hard substance such as a nail, coin or the like. The user that purchased the prepaid card 8 scratches off the coating material by scratching the portion of that prepaid card 8 coated with the coating material with a hard substance such as a nail, coin or the like. Accordingly, the SC-ID that had been coated by the coating material becomes visible.

This SC-ID is to be entered by the user operating the operating section 7.

The client terminal apparatus 1 encrypts the SC-ID, which is entered via the operating section 7, with the private key stored in the memory card 6 so as to send it to the master server apparatus 2. Accordingly, payment is completed using the prepaid card 8 in this electronic settlement system.

It should be noted that confidentiality is maintained by coating with a coating material the SC-ID, which is printed on the prepaid card 8, such that it is not visible under normal conditions. However, this may be such that, for example, the SC-ID is magnetically recorded (or it may be optically recorded, magneto-optic recorded or the like), whereby this magnetically recorded SC-ID can be read out by, for example, a card reader and the like on the user's side. Accordingly, since the SC-ID is magnetically recorded, the SC-ID is not visible, and the troublesome task of scratching off the coating material or manually entering the SC-ID by operating the operating section 7 may be omitted.

On the other hand, an optical disc 9 is, for example, a CD-ROM or DVD-ROM or the like, which is recorded with payment information and a unique identification number (MID) that is different for every respective optical disc and the like. The MID is formed by encrypting, for example, the serial number of each optical disc 9 with the public key (or private key), which the master server apparatus 2 owns.

The client terminal apparatus 1 is provided with a disc drive. When the optical disc 9 is loaded therein, the client terminal apparatus 1 plays back the MID and the like that is recorded on the optical disc 9 by this disc drive. Then, the client terminal apparatus 1 encrypts this MID and the like with the private key which is recorded on the memory card 6, so as to send it to the master server apparatus 2. Accordingly, in this electronic settlement system, payment is completed using the optical disc 9.

### Configuration of Master Server Apparatus

In this electronic settlement system, all or a portion of the purchased amount for the prepaid card 8 or the optical disc 9 purchased by the user is registered (=paid) as a prepaid amount in the master server apparatus 2. The master server apparatus 2 manages this registered prepaid amount with the MC-ID of that user's memory card 6 (or client ID of the client terminal apparatus 1). The master server apparatus 2 has first database 10 and second database 11 as shown in FIG. 1 for allowing such management.

The "serial numbers" of the prepaid cards 8 or the optical discs 9 and "used attributes", which indicate whether or not that the prepaid card 8 or the optical disc 9 has been used in the past, are stored within first database 10.

As previously stated, the SC-ID or MID which is obtained by encrypting the serial number of that medium with the public key (or private key) that the master server apparatus 2 owns, is printed or stored on each prepaid card 8 and each optical disc 9. The serial number before this encryption is performed (it may also be a serial number with encrypted numbers) is stored in the first database 10 as the above-mentioned "serial number".

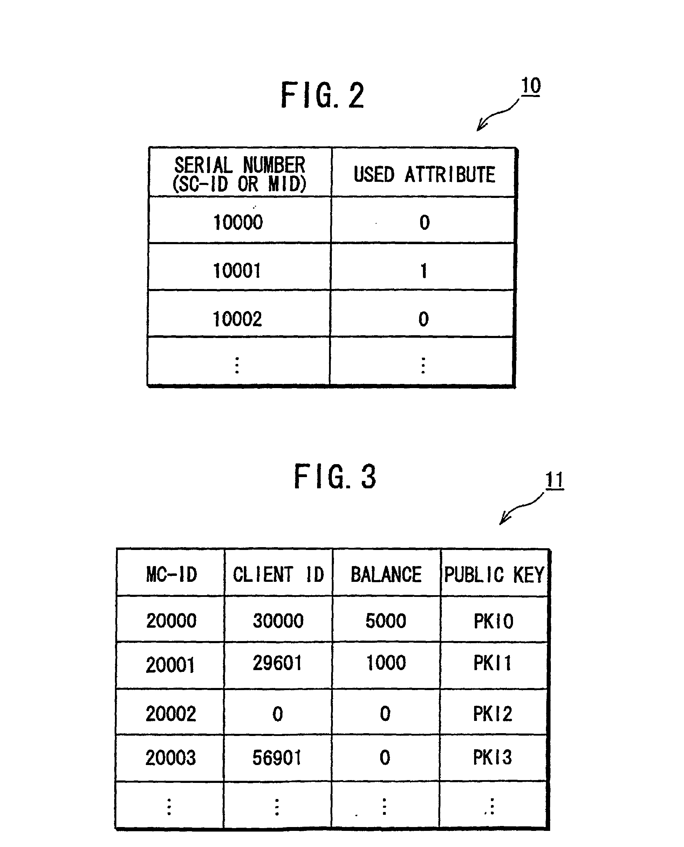

An example of the "serial numbers" and "used attributes" that are stored in the first database 10 are shown in FIG. 2. As can be understood from FIG. 2, the serial numbers of the prepaid cards 8 or optical discs 9, which are manufactured on the system manager's side, are stored in order, for example, No. 10000, No. 10001, No. 10002... and the like in the first database 10.

Furthermore, corresponding to each serial number, the used attributes indicating whether or not the prepaid card 8 or optical disc 9 of that serial number has been utilized in the past are stored in this first database 10 as, for example, 0, 1, 0... and the like.

When this used attribute is stored as "0", it indicates that the prepaid card 8 or optical disc 9 of that serial number is unused. When this used attribute is stored as "1", it indicates that the prepaid card 8 or optical disc 9 of that serial number is used.

For example, in the case of the example shown in FIG. 2, since the used attribute of the prepaid card 8 or optical disc 9 of serial number No. 10000 is "0", it is indicated as unused. Since the used attribute of the prepaid card 8 or optical disc 9 of serial number No. 10001 is "1", it is indicated as used. Since the used attribute of the prepaid card 8 or optical disc 9 of serial number No. 10002 is "0", it is indicated as unused.

As will be described in detail later, during the procedures for the user's payment, the master server apparatus 2 distinguishes the used attribute of that serial number's prepaid card 8 or optical disc 9. In the case of where the used attribute is "0", which indicates that it is unused, the master server apparatus 2 judges the payment procedures to be correct and carries out the payment process, as well as updates in correspondence with that serial number the used attribute from "0", which indicates that it is unused, to "1", which indicates that it is used.

On the contrary, when the used attribution is "1", that prepaid card 8 or optical disc 9 is indicated as used. Thus, the master server apparatus 2 judges that the presently carried out payment procedure is incorrect, and does not carry out the payment process.

Next, the MC-ID of each memory card 6, the client ID of the client terminal apparatus 1 that utilizes each memory card 6, the deposit amount (balance) of the user that utilizes that memory card 6 and client terminal apparatus 1, and the public key corresponding to the private key stored in each memory card 6 are stored in the second database 11 of the master server apparatus 2.

An example of the "MC-IDs", "client IDs", "balances" and "public keys" that are stored in this second database 11 is shown in FIG. 3. As can be understood from FIG. 3, the MC-IDs of the memory cards 6, which are manufactured on the manager's side, are stored in order, for example, No. 20000, No. 20001, No. 20002, No. 20003... and the like in the second database 11.

As will be described later, when the SC-ID and MID are sent from the client terminal apparatus 1 to the master server apparatus 2, the client ID of the client terminal apparatus 1, which performs that transmission, and the MC-ID of memory card 6, which is being utilized by that client terminal apparatus 1, are also sent. Thus, the second master server apparatus 2 registers the client ID corresponding to the MC-ID of the memory card 6.

For example, in the case of the example shown in FIG. 3, in relation to the memory card 6 having the MC-ID No. 20000, the client terminal apparatus 1 having the client ID No. 30000 is registered. Furthermore, in relation to the memory card 6 having the MC-ID No. 20001, the client terminal apparatus 1 having the client ID No. 29601 is registered. Furthermore, in relation to the memory card 6 having the MC-ID No. 20003, the client terminal apparatus 1 having the client ID No. 56901 is registered.

It should be noted that in relation to the memory card 6 having the MC-ID No. 20002, the client ID No. 0 is registered. This means that there is no client terminal apparatus 1 registered in relation to the memory card 6 having the MC-ID No. 20002.

Namely, the memory card 6 having this MC-ID No. 20002 has not yet been sold to a user, indicating that it has not been utilized. As a result, the client terminal apparatus 1, which utilizes the memory card 6 having this MD-ID No. 20002, consequently does not exist.

Next, the user's deposit amount (balance) is managed by a combination of the MC-ID of the memory card 6 and the client ID of the client terminal apparatus 1 of each user.

For example, in the case of the example shown in FIG. 3, by the combination of the memory card 6 having the MC-ID No. 20000 and the client terminal apparatus 1 having the client ID No. 30000, the balance for the user utilizing this electronic settlement system is "5000 yen". By the combination of the memory card 6 having the MC-ID No. 20001 and the client terminal apparatus 1 having the client ID No. 29601, the balance for the user utilizing this electronic settlement system is "1000 yen". By the combination of the memory card 6 having the MC-ID No. 20003 and the client terminal apparatus 1 having the client ID No. 56901, the balance for the user utilizing this electronic settlement system is "0 yen (no balance)".

In this manner, the prepaid amount, which is prepaid by the user, is managed on the master server apparatus 2 side with the MC-ID, which is a unique identification number assigned to the memory card 6 (, and the client number of the client terminal apparatus 1).

Next, the second database 11 is constructed to store the public key (or private key) corresponding to the private key (or public key) stored in the memory card 6 and the MC-ID of the memory card 6 in a state of being associated with each other.

The public key corresponding to the private key stored in each memory card 6 is stored in the second database 11. FIG. 3 shows the example of where each of the public keys, for example, PKI0, PKI1, PKI2, PKI3... corresponding to the private keys of each memory card 6 having the MC-IDs No. 20000, No. 20001, No. 20002, No. 20003... are respectively stored in the second database 11.

It should be noted that since the electronic settlement system of this embodiment employs such aforementioned "public key", the "public key" is stored in this second database 11. However, in the case where the "common key" is employed to this electronic settlement system, in exchange for the "public key", the same "common key" as that stored in each memory card 6 comes to be stored in the second database 11.

The private key (or public key) is pre-stored in the memory card 6, however, it may happen that access is mace from the client terminal apparatus 1 connected with the memory card 6 in which the private key (or public key) is not stored. In this case, the master server apparatus 2 generates the private key and public key to send the private key (or public key) to the client terminal apparatus 1. Besides, the master server apparatus 2 stores in the second database 11 the public key (or private key) generated in relation with the MC-ID of the memory card, thereby the system being available.

In this manner, in this electronic settlement system, the prepaid amount, which is prepaid by the user, is managed with the MC-ID, which is a unique identification number assigned to the memory card 6 (and the client number of the client terminal apparatus 1). If looked from the user's side, this is the same as the prepaid amount being stored in the memory card 6, which means the memory card 6 itself is the user's wallet.

Here, when a monetary value is added to the memory card 6 itself in this manner, unauthorized use of the memory card 6 becomes a problem. Namely, monetary loss for the user caused by losing or being robbed of the memory card 6 may be anticipated.

However, in the case of this electronic settlement system, the prepaid amount that is stored in master server apparatus 2 is managed with the MC-ID of the memory card 6 and the client ID of the client terminal apparatus 1 of that user.

As previously stated, the MC-ID and client ID are respectively unique identification numbers. Accordingly, there are no two combinations like the combination of the MC-ID and client ID, which is the combination of these unique identification numbers. Therefore, the combination of the MC-ID and client ID is a combination that sufficiently authenticates the user utilizing the memory card 6.

In the case where another user illicitly utilizes the actual user's memory card 6, this actual user's memory card 6 is utilized at another user's client terminal apparatus 1. The client ID of another user's client terminal apparatus 1 differs from the client ID of the actual user pre-registered in the master server apparatus 2. As a result, another user that carries out such unauthorized usage cannot utilize this electronic settlement system by using that actual user's memory card 6. Accordingly, the actual user's prepaid amount will not suffer damages.

In this manner, this electronic settlement system structures an extremely secure system based on both unique IDs of the MC-ID and client ID.

### Brief Description of Payment Procedure

Next, how to pay with such electronic settlement system is described. Schematically, the user purchases the prepaid card 8 or the optical disc 9 that is issued from the manager's side of this system, and registers in the master server apparatus 2 the SC-ID printed on the prepaid card 8 or the MID assigned to the optical disc 9. The master server apparatus 2 registers, as a prepaid amount, in the database all (or a portion) of the purchased amount for the prepaid card 8 or optical disc 9 purchased by the user. Accordingly, payment with this electronic settlement system is completed.

### Payment Using a Prepaid Card

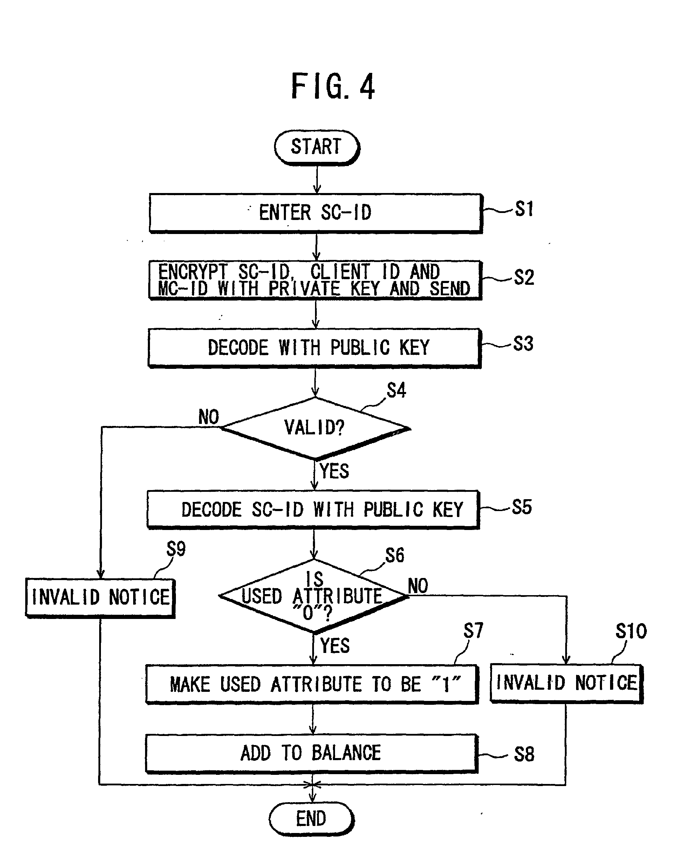

The flow of a payment procedure using the prepaid card 8 is shown in the flowchart of FIG. 4. In the case of paying with the prepaid card 8, the user purchases the prepaid card 8, and activates the client terminal apparatus 1 in the condition with the memory card 6 loaded therein. Then, links his/her own client terminal apparatus 1 with the master server apparatus 2 via Internet 4.

The master server apparatus 2 sends information of the input screen for payment with the prepaid card 8 when the link with the client terminal apparatus 1 is established. Accordingly, the input screen for payment that is sent from the master server apparatus 2 side is displayed upon a monitor device such as a television receiver and the like, which is connected to the user's client terminal apparatus 1.

The flowchart shown in FIG. 4 starts at the timing of when this input screen for payment is displayed upon the monitor device.

The user, based on the input screen for payment displayed upon the monitor screen, operates the operating section 7 so as to enter the SC-ID of prepaid card 8 he/she bought, and specifies the transmission of this entered SC-ID. In step S1, the client terminal apparatus 1 detects the SC-ID of the prepaid card 8 that is entered by this user. Accordingly, the payment procedure using this prepaid card 8 proceeds to step S2.

In step S2, the client terminal apparatus 1 that is specified by the user to send the SC-ID reads out the private key stored in the memory card 6, and by using this private key, encrypts the SC-ID of the prepaid card 8, the MC-ID of the memory card 6, and client ID of the client terminal apparatus 1 so as to send them together with an non-encrypted MC-ID to the master server apparatus 2. Accordingly, the payment procedure using this prepaid card 8 proceeds to step S3.

In step S3, the master server apparatus 2 receives the information sent from the client apparatus 1 side. The master server apparatus 2 retrieves from the second database 11, the public key that corresponds to the private key used when encrypting the SC-ID, the MC-ID, and the client ID, according to the non-encrypted MC-ID. The master server apparatus 2, with the retrieved public key, decodes the SC-ID, the MC-ID, and the client ID, which are encrypted and sent from the client terminal apparatus 1 side.

It should be noted that comparison between the decoded MC-ID and the received non-encrypted MC-ID may be performed so as to check whether or not a proper memory card 6 is used.

Specifically, to describe using the example of FIG. 3, in the case where, for example, the MC-ID of the memory card 6 that is sent from the client terminal apparatus 1 side is No. 20000, the public key corresponding to the private key that is stored in the memory card 6 having this MC-ID is "PKI0". Therefore, the master server apparatus 2 performs the decoding of the SC-ID, MC-ID, and client ID with this public key "PKI0".

Similarly, for example, in the case where the MC-ID of the memory card 6 that is sent from the client terminal apparatus 1 side is No. 20003, the public key corresponding to the private key that is stored in the memory card 6 having this MC-ID is "PKI3". Therefore, the master server apparatus 2 performs the decoding of the SC-ID, MC-ID, and client ID with this public key "PKI3".

When such decoding of the SC-ID, MC-ID and, client ID is completed, the payment procedure using this prepaid card 8 proceeds to step S4.

In step S4, by distinguishing whether or not the combination of the MC-ID and client ID sent from the client terminal apparatus 1 side matches the combination of the MC-ID and client ID registered in the second database 11, the master server apparatus 2 distinguishes whether or not that access is valid.

Then, when both sides match, since that access is a valid access, the payment procedure using this prepaid card 8 proceeds to step S5.

On the contrary, when both sides do not match, since it is conceivable that, for example, third parties other than the actual user illicitly utilizes the memory card 6, the master server apparatus 2 decides that the access is invalid, whereby the payment procedure using this prepaid card 8 proceeds to step S9.

It should be noted that the master server apparatus 2 may register the MC-ID of the memory card 6 and client ID of the client terminal apparatus 1 in the case where the memory card 6 is not associated with any one of client terminal apparatuses 1.

In step 9, since the combination of the MC-ID and client ID sent from the client terminal apparatus 1 sice is a combination that does not match with the combination of the MC-ID and client ID registered within the second database 11, the master server apparatus 2 sends to the user's client terminal apparatus 1 side a notice invalidating the payment procedure, for example, "This memory card cannot be used for payment" and the like and ends the payment procedure using this prepaid card 8.

On the other hand, when a match between the combination of the MC-ID and client ID sent from the client terminal apparatus 1 side and the combination cf the MC-ID and client ID registered within the second database 11 is detected and this access is judged as a valid access, the payment procedure using this prepaid card 8 proceeds to step S5.

In step S5, the master server apparatus 2 decodes the SC-ID by using the public key that corresponds to the private key used when encrypting the SC-ID. Accordingly, the payment procedure using this prepaid card 8 proceeds to step S6.

As described above, in this example, the SC-ID is the serial number of the prepaid card 8. Therefore in step S6, the master server apparatus 2 checks the decoded serial number (SC-ID) of the prepaid card 8 against the serial number of prepaid card 8 stored in the first database 10. Then, if the used attribute of this serial number is detected and found to be "0", since that prepaid card 8 is unused and valid, the payment procedure using this prepaid card 8 proceeds to step S7.

On the contrary, if the used attribute is found to be "1", since that prepaid card 8 is a used and invalid prepaid card 8, in step 10, the master server apparatus 2 sends the user's client terminal apparatus 1 side a notice invalidating the payment procedure, for example, "This is a used prepaid card" and the like and ends the payment procedure using this prepaid card 8.

Specifically, to describe based on the example shown in FIG. 2, in the case where the serial number of that prepaid card 8 is, for example, No. 10000, since the used attribute is "0" and indicates it being unused, the payment procedure using this prepaid card 8 proceeds to step S7.

On the contrary, if the serial number of that prepaid card 8 is No. 10001, since the used attribute is "1" and indicates it being used, the payment procedure using this prepaid card 8 proceeds to step S10 and the aforementioned invalid notice is sent to the user.

Next, in step S7, the master server apparatus 2 updates the used attribute of the prepaid card 8 of that serial number, which is registered in the first database 10, from "0" indicating unused to "1" indicating used. Accordingly, the prepaid card 8 of that serial number, from that point on, is treated as a used prepaid card 8 in this electronic settlement system.

Next, in step S8, the master server apparatus 2 adds the amount of money that corresponds to the prepaid card 8 to the balance stored in the second database 11. As a result, the payment procedure using this prepaid card 8 formally ends, whereby from that point on, distribution of desired contents and the like may be received within the limits of this balance.

### Payment Using an Optical Disc

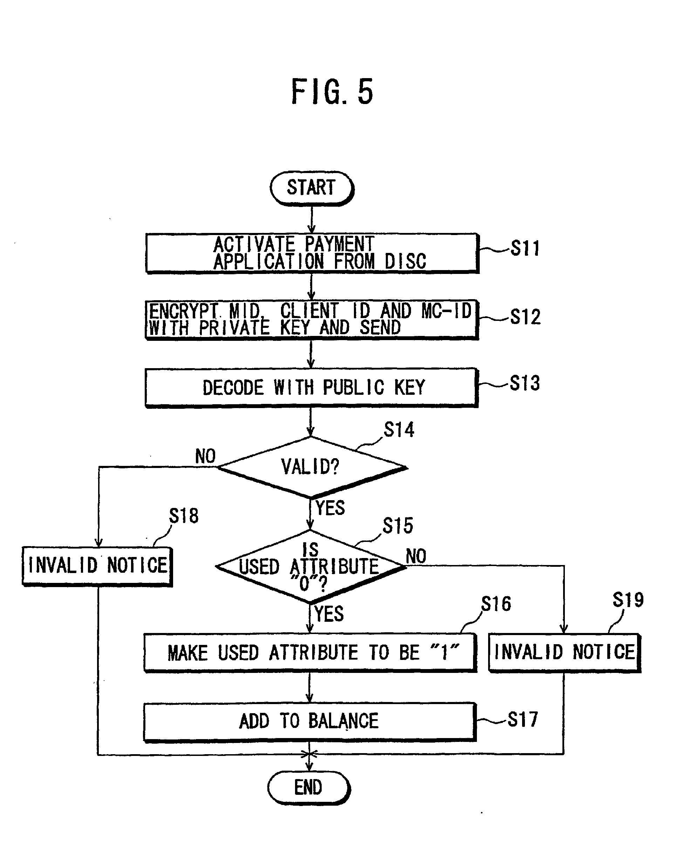

Next, the flowchart of FIG. 5 shows the flow of payment using the optical disc 9. When payment is carried out using the optical disc 9, the user activates the client terminal apparatus 1, then links his/her own the client terminal apparatus 1 with the master server apparatus 2 via Internet 4 and loads the purchased optical disc 9 into the disc drive.

The flowchart shown in FIG. 5 starts with loading optical disc 9 into the disc drive of this client terminal apparatus 1.

In step S11, the client terminal apparatus 1 reads out the payment application program stored in the optical disc 9 and initiates the payment procedure based on this payment application program. Accordingly, the payment procedure using this optical disc 9 proceeds to step S12.

In step S12, the client terminal apparatus 1, based on the payment application program, reads out the private key that is stored in the memory card 6, and using this private key, encrypts the MID, which is a unique identification number stored in the optical disc 9, the MC-ID of the memory card 6, and the client ID of the client terminal apparatus 1. Then, the client terminal apparatus 1 sends these encrypted MID, MC-ID, and client ID to the master server apparatus 2. Accordingly, the payment procedure using this optical disc 9 proceeds to step S13.

In step S13, the master server apparatus 2 retrieves from the second database 11 the public key corresponding to the private key that is stored in the memory card 6, and using this retrieved public key, decodes the MID, MC-ID, and client ID that are encrypted and sent from the client terminal apparatus 1 side. When such decoding of the MID, MC-ID, and client ID is completed, the payment procedure using this optical disc 9 proceeds to step S14.

In step S14, by distinguishing whether or not the combination of the MC-ID and client ID sent from the client terminal apparatus 1 side matches the combination of the MC-ID and client ID registered in the second database 11, the master server apparatus 2 distinguishes whether or not that access is valid.

Then, if both sides match, since that access is a valid access, the payment procedure using this optical disc 9 proceeds to step S15. On the contrary, if both sides do not match, since it is conceivable that, for example, third parties other than the actual user illicitly utilizes the memory card 6, the master server apparatus 2 judges that access as invalid, whereby the payment procedure using this optical disc 9 proceeds to step S18.

In step S18, since the MC-IDs and client IDs do not match, the master server apparatus 2 sends to the user's client terminal apparatus 1 side a notice invalidating the payment procedure, for example, "This memory card cannct be used for payment" and the like, and ends the payment procedure using this optical disc 9.

On the other hand, if a match between MC-IDs and client IDs is detected and the access is judged as a valid access, and the payment procedure using this optical disc 9 proceeds to step S15, by decoding the MID with the public key that corresponds to the private key used when encrypting the MID, the master server apparatus 2 decodes the serial number of the optical disc 9 to which this MID is attached. Then, the serial number of this decoded optical disc 9 is checked with the serial number of the optical disc 9 stored in the first database 10 so as to detect the used attribute of the serial number. When the used attribute is "0", since that optical disc 9 is unused and valid, the payment procedure using optical disc 9 proceeds to step S16.

On the contrary, when the used attribute is "1", since that optical disc 9 is used and invalid, in step S19, the master server apparatus 2 sends to the user's client terminal apparatus 1 side a notice invalidating the payment procedure, for example, "This is a used optical disc" and the like, ending the payment procedure using this optical disc 9.

Next, in step S16, the master server apparatus 2 updates the used attribute of the optical disc 9 of that serial number that is registered in the first database 10 from "0" indicating unused to "1" indicating used. Accordingly, the optical disc 9 of that serial number, from that point on, is treated as a used optical disc 9 in this electronic settlement system.

Next, in step S17, the master server apparatus 2 adds the amount of money that corresponds to optical disc 9 to the balance stored in the second database 11. Accordingly, the payment procedure using this optical disc 9 formally ends, whereby from that point on, distribution of desired contents and the like may be received within the limits of this balance.

In the aforementioned case where payment was carried out with the prepaid card 8, it was necessary to enter the SC-ID by operating the operating section 7. However, in the case where payment is carried out with optical disc 9, just by loading the optical disc 9 into the client terminal apparatus 1, the client terminal apparatus 1 can automatically read out the MID and send it to the master server apparatus 2 side. Thus, the task of entering the MID may be omitted.

### Charge Process

Next, when such payment process is completed, within the limits of his/her own balance registered in the master server apparatus 2, the user is able to purchase products or download desired contents, for example, music contents, game contents, movie contents and the like, that are stored in contents database 12 shown in FIG. 1. The master server apparatus 2 carries out the charge process for the contents downloaded by the user or products purchased by the user.

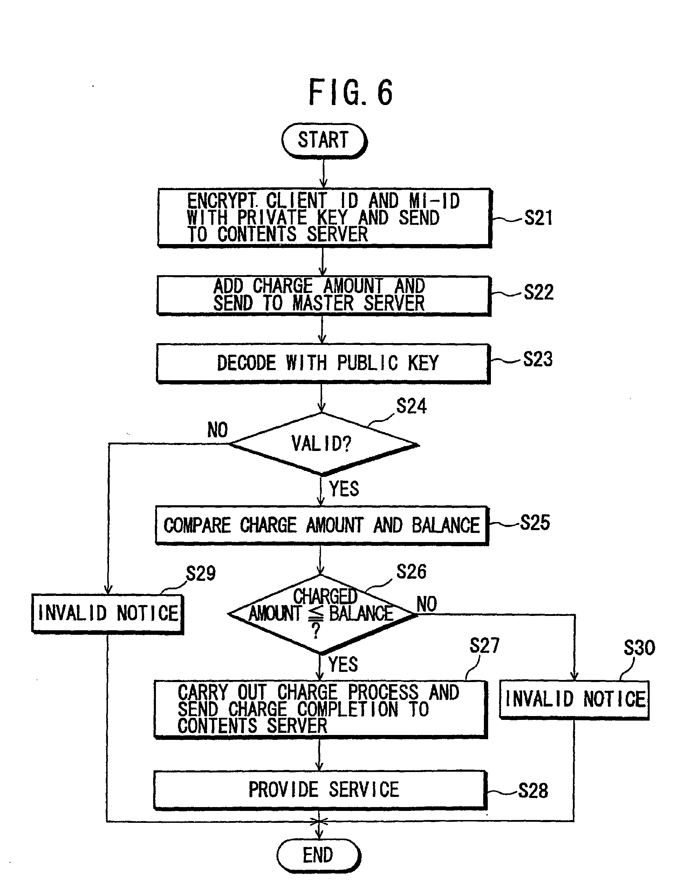

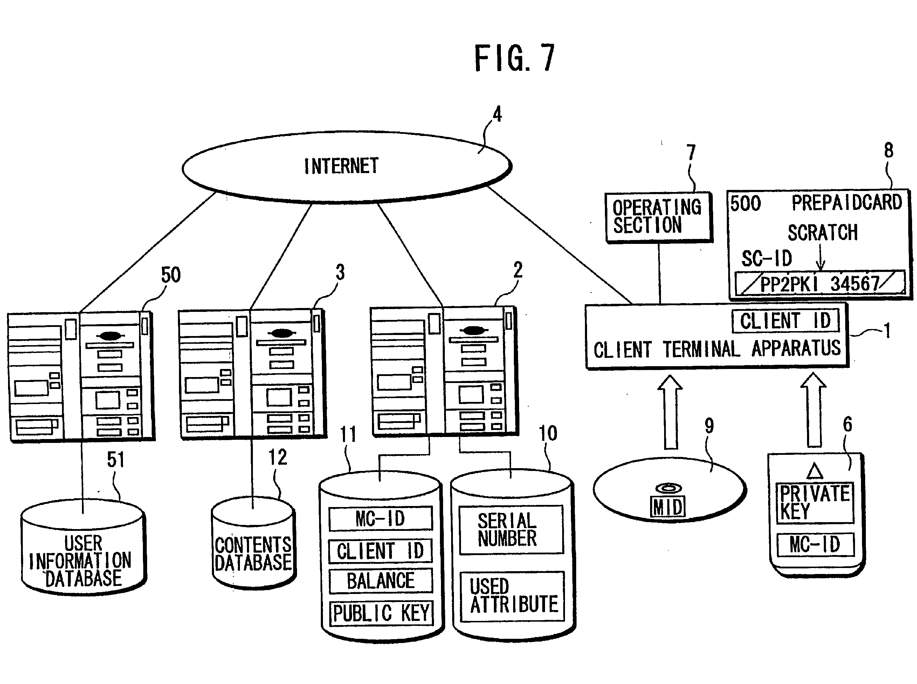

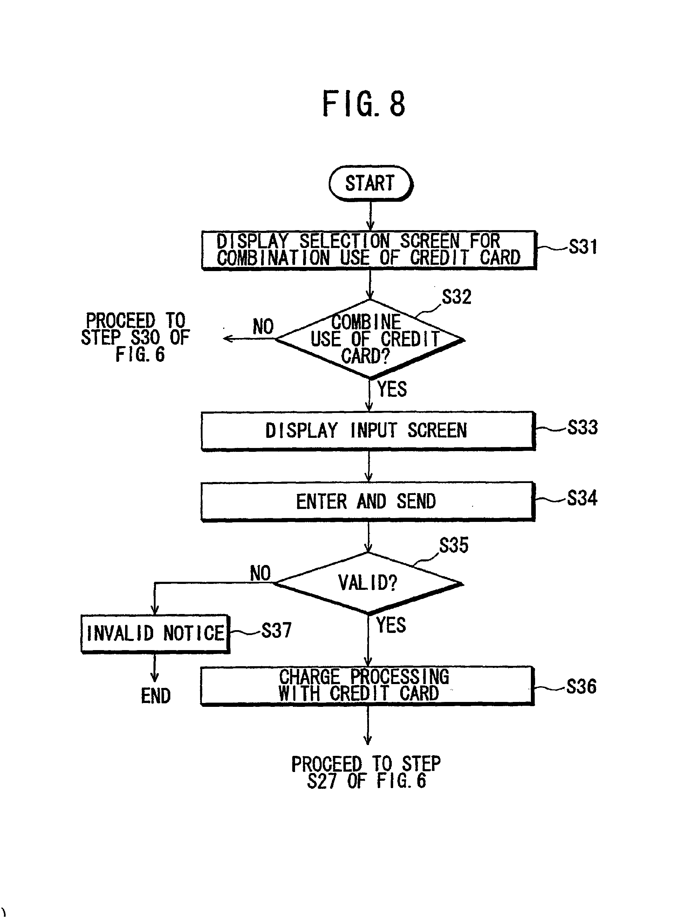

A flowchart showing the flow of a charge process in this electronic settlement system is shown in FIG. 6. This flowchart shown in FIG. 6 starts at a timing of when the user proposes to download desired contents or purchase products, and the contents server apparatus 3 detects an occurrence of a charge event for the user.

To begin with, the user that proposed downloading contents or purchasing products operates his/her own client terminal apparatus 1, instructing transmission of the client ID, and MC-ID of memory card 6 which is loaded into this client terminal apparatus 1.

In step S21, the client terminal apparatus 1 encrypts the client ID and MC-ID with the private key that is stored in the memory card and sends them to the contents server apparatus 3. Accordingly, the progression of this charge process proceeds to step S22.

In step S22, the contents server apparatus 3 adds to the client ID and MC-ID that are sent from the user's client terminal apparatus 1, information (charging information) that indicates the charge amount for the contents or products the user desires, and sends them to the master server apparatus 2. Accordingly, the progression of this charge process proceeds to step 523.

In step S23, the master server apparatus 2 retrieves from the second database 11 the public key that corresponds to the private key that is stored in the user's memory card 6. Then, with this public key, the master server apparatus 2 decodes the client ID and MC-ID that are sent from contents server apparatus 3. Accordingly, the progression of this charge process proceeds to step 524.

In step S24, by distinguishing whether or not the combination of the decoded MC-ID and client ID matches the combination of the MC-ID and client ID registered in the second database 11, the master server apparatus 2 distinguishes whether or not that access is valid.

Then, if both sides match, the master server apparatus 2 judges that access as a valid access. Accordingly, the progression of this charge process proceeds to step S25.

On the contrary, if both sides do not match, since it is conceivable that, for example, third parties other than the actual user illicitly utilizes the memory card 6, the master server apparatus 2 judges that access as invalid. In this case, the progression of this charge process proceeds to step S29.

In step S29, since the MC-IDs and client IDs do not match, the master server apparatus 2 sends a notice indicating an invalid access to the contents server apparatus 3. The contents server apparatus 3, corresponding to this notice, sends to the user's client terminal apparatus 1 an invalid notice, for example, "Services can not be provided with this memory card" and the like. Accordingly, this charge procedure ends.

On the other hand, if a match between MC-IDs and client IDs is detected and the progression of this charge process proceeds to step S25, the master server apparatus 2 compares the charge amount (the price of the contents or products that the user wishes to purchase), which indicates the charging information sent from the contents server apparatus 3, to that user's prepaid amount (balance), which is stored in the second database 11. Then, in step S26, it is distinguished whether or not the charge amount is the same as the balance or the charge amount is less than the balance (charge amount ≦ balance).

When the charge amount is greater than the balance, since that user cannot pay for the contents and the like, the progression of this charge process proceeds to step S30.

On the contrary, when the charge amount is the same as or less than the balance, since that user is able to pay for the contents and the like, the progression of this charge process proceeds to step 527.

For example, to describe using the example shown in FIG. 3, the balance of the user having memory card 6 of the MC-ID No. 20001 is 1000 yen. In this case, it is possible to charge up to 1000 yen, but not 1001 yen or more. Thus, if this user wishes to purchase contents and the like of 1000 yen or less, since it is a payable amount, the progression of this charge process proceeds to step S27. On the contrary, if the user wishes to purchase contents and the like of 1001 yen or more, since it is not a payable amount, the progression of this charge process proceeds to step S30.

In step S30, the master server apparatus 2 sends to the user's client terminal apparatus 1 an invalid notice such as "Services cannot be provided due to insufficient balance. Please pay a charge." and the like. Accordingly, this charge procedure ends. In this case, the user is not able to receive desired services due to insufficient balance.

Next, in step S27, since that user's balance is either the same amount or greater than the charge amount, the master sever apparatus 2 updates that user's balance to the amount with the charge amount deducted therefrom. Furthermore, the master server apparatus 2 sends to the contents server apparatus 3 the information (charge completion notice) indicating that charging has ended. Accordingly, the progression of this charge process proceeds to step 528.

In step S28, the contents server apparatus 3 that received this charge completion notice provides the services of shipping the user's desired products or distributing the user's desired contents or the like. Accordingly, the complete cycle of this charge process is concluded.

### Results of the First Embodiment

As evident from the above description, in the electronic settlement system of this first embodiment, the user purchases the prepaid card 8 or optical disc 9. The user operates his/her own client terminal apparatus 1 so as to register in the master server apparatus 2 the SC-ID or MID that is a unique ID assigned to this prepaid card 8 or optical disc 9. Furthermore, the user registers in the master server apparatus 2 the client ID of his/her own client terminal apparatus 1 and MC-ID of the memory card that is utilized by this client terminal apparatus 1.

After the master server apparatus 2 identifies the user using the combination of the client ID of the client terminal apparatus 1 and MC-ID of the memory card 6, it stores the amount information corresponding to the prepaid card 8 or optical disc 9 purchased by that user, as the prepaid amount.

Then, when the user receives services such as distribution of contents and delivery of products from the contents server apparatus 3, the master server apparatus 2 carries out a charge process upon the sum that is the price for the services, from that user's prepaid amount.

In other words, according to this electronic settlement system, purchase of prepaid card 8 or optical disc 9 allows for a shift in the paying function to memory card 6 that is available to anyone and with this memory card 6, the electronic settlement can be carried out within the limits of the prepaid amount of the prepaid card 8 or optical disc 9.

Accordingly, even users such as children who cannot possess credit cards can utilize the network-based electronic settlement system. Furthermore, it can be made easier for users such as children who cannot possess credit cards to utilize net business sites.

### Second Embodiment

Next, the second embodiment of an electronic settlement system, according to the present invention, is described. The electronic settlement system of the above first embodiment is the one that conducts settlement in a prepaid format with prepaid card 8 or optical disc 9.

On the contrary, the electronic settlement system of this second embodiment is the one that conducts settlement by a combination of payment in a prepaid format with prepaid card 8 or optical disc 9 and payment in a format of withdrawing from a bank account by a credit card.

It should be noted that only in this respect does this second embodiment differ from the above first embodiment. As a result, only the differences between this second embodiment and the above first embodiment will be described in the following description, wherewith duplicate descriptions will be omitted.

### System Configuration of Electronic Settlement System

FIG. 7 is a block diagram of the second embodiment of an electronic settlement system, according to the present invention. As can be understood from FIG. 7, in addition to each apparatus configuring the electronic settlement system of the above first embodiment, the electronic settlement system of this second embodiment has management server apparatus 50 that the credit card company manages.

This management server apparatus 50 has user information database 51 in which user information such as a bank account number, the name of the bank account holder and the card number of the credit card each user possesses.

### Combination Use with Credit Card

The electronic settlement system of the above first embodiment is configured such that services within the limits of the user's prepaid amount that is stored in the second database 11 of the master server apparatus 2 can be provided, and that an invalid notice is sent (refer to step S30 of FIG. 6). when the charge amount exceeds the prepaid amount; therefore, the user cannot receive services.

However, with the electronic settlement system of this second embodiment, when the charge amount exceeds the prepaid amount, it is possible to pay that exceeded amount by credit card. As a result, even when the prepaid amount is insufficient, the user may receive the provision of services.

The flow of the charge process for combination use with this credit card is shown in the flowchart of FIG. 8. The flowchart of FIG. 8 is a flowchart of a subroutine of the charge process flowchart shown in FIG. 6. In step S26 of FIG. 6, the flow starts in the case where it is judged by the master server apparatus 2 that the prepaid amount exceeds the charge amount (in the case of No).

In step S31, since the prepaid amount exceeds the charge amount, the master server apparatus 2 sends to the client terminal apparatus 1 side a message suggesting combination with a credit card, for example, "Insufficient balance. Would you like to use a credit card in combination?" and the like. Accordingly, progression of this charge process proceeds to step S32.

The user, in response to this message, selects yes/no for combination use with a credit card and notifies the master server apparatus 2 side of the selection result. In step S32, the master server apparatus 2 distinguishes whether or not the user has requested combination use with a credit card.

If the user does not request combination use with a credit card, the master server apparatus 2, in step S30 of the flowchart shown in FIG. 6, sends an invalid notice to the user as in the foregoing and concludes this charge process.

On the contrary, if the user does request combination use with a credit card, the progression of this charge process proceeds to step S33.

In step S33, the master server apparatus 2 sends to client terminal apparatus 1 the information for the input screen, whereupon the user enters the necessary items of the credit card that he/she has. Accordingly, the progression of this charge process proceeds to step S34.

In step S34, the user operates the operating section 7 that is connected to the client terminal apparatus 1 and enters, for example, the credit card company name, card number, the cardholder's name and the like of the credit card upon this input screen. The client terminal apparatus 1 sends to the master server apparatus 2 each piece of information entered by this user. Accordingly, the progression of this charge process proceeds to step S35.

In step S35, the master server apparatus 2 inquires the credit card company based on the information sent back from the user and distinguishes whether or not that user's credit card is valid.

Specifically, the master server apparatus 2 exhibits the card number, cardholder's name and the like of the credit card to the management server apparatus 50 of the credit card company, the name of which is designated by the user, for an inquiry. The management server apparatus 50 retrieves from user information database 51 the user information of the user inquired thereupon. Then, the management server apparatus 50 distinguishes whether or not the credit card that user possesses is valid and sends this answer to the master server apparatus 2.

When the master server apparatus 2 obtains an answer indicating that credit card as being valid from the management server apparatus 50 of the credit card company, the progression of this charge process proceeds to step S36.

On the contrary, when the master server apparatus 2 obtains an answer indicating that credit card as being invalid from the management server apparatus 50 of the credit card company, the progression of this charge process proceeds to step S37.

In step S37, since the credit card may not be used in addition to the prepaid amount being insufficient, the master server apparatus 2 sends to the client terminal apparatus 1 side a message indicating that the credit card is unusable, such as "This credit card cannot be used" and the like. Accordingly, progression of this charge process is concluded.

On the other hand, in step S36, since the credit card is valid, the master server apparatus 2 communicates with management server apparatus 50 of the credit card company so as to carry out the charge process upon the charge amount of that user such that payment of the amount exceeding the prepaid amount is paid with a credit card.

Specifically, in the case where the charge amount of the user is 1000 yen and the balance of that user's prepaid amount is 600 yen, the master server apparatus 2 carries out the charge process by communicating with the management server apparatus 50 such that the deficient portion of the prepaid amount of this charge amount, which is equal to 400 yen, is paid with a credit card.

When charge processing for this credit card is carried out, the progression of the charge process proceeds to step S27 of the flowchart shown in FIG. 6. In step S27, the master server apparatus 2 deducts from the user's prepaid amount, the resulting charge amount frcm which the amount paid by credit card is deducted and sends to the contents server apparatus 3 a notice of charge completion as in the above manner.

Namely, in the case of the aforementioned example, since 400 yen of the user's charge amount of 1000 yen is paid with a credit card, the master server apparatus 2 deducts the remaining 600 yen from that user's prepaid amount, completing the charge process. As a result, the user's prepaid amount comes to be 0 yen. Furthermore, the user will later receive a bill for the amount paid by the credit card from the credit card company.

It should be noted that in response to the reception of a notice of charge completion from the master server apparatus 2 by contents server apparatus 3, the contents server apparatus 3 provides services such as distribution of contents or delivery of products for the user, as in the foregoing (step S28).

### Results of the Second Embodiment

As evident from the above description, according to the electronic settlement system of this second embodiment allowing for combination use of a pre-payment and payment by credit card, even if the user's prepaid amount is insufficient, compensation for the insufficient portion can be made by paying it with a credit card. As a result, the electronic settlement system of this second embodiment enables provision of services to the user even when the prepaid amount is insufficient.

### Payment Using Only Credit Card

It should be noted that this second embodiment is the one that carries out a charge process combining payment by credit card and a prepaid method of payment with prepaid card 8 or optical disc 9, however, a charge process using only a credit card may also be carried out.

As described in the second embodiment, in the case of payment using a credit card, the master server apparatus 2 stores in the second database 11 the card number, cardholder's name and the like of the credit card in the form of corresponding to the MC-ID (and client ID) of the user's memory card 6. Accordingly, the paying function of the credit card can be shifted to the user's memory card 6.

Then, when providing services, the master server apparatus 2 identifies the user to which the service is provided based upon the MC-ID (and client ID) and communicates with the management server apparatus 50 of the credit card company based on the card number, cardholder's name and the like of the identified user's credit card so as to carry out the charge process.

Accordingly, providing services within the limits of the available amount of money of the credit card the user possesses is possible, and inconveniences where provision of services becomes impossible depending on insufficient balance in the user's prepaid amount may be nearly prevented.

The technical spirit of the present invention allows for electronic settlement by shifting the paying function of media, which have the paying functions of prepaid card 8, optical disc 9, a credit card or the like to, for example, memory card 6, which is a secure device easily available to anyone.

As a result, in the above description of each embodiment, examples of prepaid card 8, optical disc 9 and a credit card as media having paying functions have been given for descriptive purposes, however, the media having paying functions are not limited to prepaid card 8, optical disc 9 and credit cards, whereby other media having paying functions may also be used. Furthermore, the paying function of the media is shifted to, for example, memory card 6, however, it may also be shifted to another secure device.

Then, it should be added that even with other alterations, various modifications thereto according to design of choice and such can be made without deviating from the technical spirit and scope of the present invention.

### INDUSTRIAL APLICABILITY

The present invention can be applied to electronic settlement systems in which pre-payments can be done by prepaid cards or prepaid discs so as to provide service of distributing contents or the like within the prepaid amount.

## Claims

1. An electronic settlement system comprising:
a medium, which is assigned a unique medium identification number;
a device, which is assigned a unique device identification number;
a terminal apparatus, which sends at least the medium identification number of the medium and the device identification number of the device; and
a management apparatus that includes a database stored with user information that corresponds to at least each device identification number, user identifying means for identifying a user by referencing the database based upon the device identification number that is sent from the terminal apparatus, and charge means for carrying out a charge process that is possible with a medium having the medium identification number for the user identified by the user identifying means.

2. The electronic settlement system according to claim 1, wherein
the terminal apparatus has a unique terminal identification number, and sends the terminal identification number together with the medium identification number and the device identification number to the management apparatus, and
the management apparatus has a database, which is stored with user information that corresponds to at least each device identification number and each terminal identification number; identifies a user by the user identifying means with referring to the database based upon the device identification number and the terminal identification number sent from the terminal apparatus; and carries out a charge process, which is possible with a medium having the medium identification number, for this identified user by the charge means.

3. The electronic settlement system according to claim 1 or 2, wherein
the medium is a prepaid medium that is purchased by a user,
the terminal apparatus sends to the management apparatus at least the medium identification number of the prepaid medium and the device identification number of the device,
the database of the management apparatus is stored with a prepaid amount that corresponds to the medium identification number of the prepaid medium, by corresponding to the user identified by the device identification number sent from the terminal apparatus, and
the charge means of the management apparatus carries out a charge process on the identified user's prepaid amount that is stored in the database.

4. The electronic settlement system according to claim 3, wherein
the prepaid medium is coated with a coating material which coats so that a printed portion of at least the medium identification number can be scratched off and that at least the printed portion of the medium identification number before being scratched off can be in a non-visible state, and
the terminal apparatus sends to the management apparatus the medium identification number which is entered by the user together with at least the device identification number.

5. The electronic settlement system according to claim 3, wherein
the prepaid medium is a recording medium that is stored with the medium identification number, and
the terminal apparatus plays back the medium identification number which is stored on the recording medium and sends the played back medium identification number together with at least the device identification number to the management apparatus.

6. The electronic settlement system according to any one of claims 1 to 5, wherein
the terminal apparatus encrypts at least the medium identification number of the medium and the device identification number of the device with a private key which is stored in the device, based upon a public key encryption method or a common key encryption method so as to send to the management apparatus.

7. An electronic settlement method comprising the steps of:
sending from a terminal apparatus at least a unique medium identification number assigned to a medium and a unique device identification number assigned to a device; and
on a management apparatus,
identifying a user by referring to a database which is stored with user information that corresponds to at least each device identification number, based upon the device identification number sent from the terminal apparatus; and
carrying out a charge process which is possible with a medium having the medium identification number, for the identified user.

8. The electronic settlement method according to claim 7,
wherein
the step of sending identification numbers comprises a step of sending to the management apparatus a unique terminal identification number which is assigned to the terminal apparatus, together with the medium identification number and the device identification number, and
the management apparatus identifies a user by referring to a database which is stored with user information that corresponds to at least each device identification number and each terminal identification number, based upon the device identification number and the terminal identification number sent from the terminal apparatus so as to carry out a charge process.

9. The electronic settlement method according to claim 7 or 8, wherein
the medium is a prepaid medium, which is purchased by a user,
the terminal apparatus sends to the management apparatus at least the medium identification number of the prepaid medium and the device identification number of the device, and
the management apparatus stores in the database a prepaid amount that corresponds to the medium identification number of the prepaid medium, by corresponding to the user identified by the device identification number sent from the terminal apparatus, and carries out a charge process on the identified user's prepaid amount which is stored in the database.

10. The electronic settlement method according to claim 9, wherein
the prepaid medium is coated with a coating material which coats so that a printed portion of at least the medium identification number can be scratched off and that at least the printed portion of the medium identification number before being scratched off can be in a non-visible state, and
the terminal apparatus sends to the management apparatus the medium identification number which is entered by the user, together with at least the device identification number.

11. The electronic settlement method according to claim 9, wherein
the prepaid medium is a recording medium that is stored with the medium identification number, and
the terminal apparatus plays back the medium identification number which is stored on the recording medium, and sends the played back medium identification number together with at least the device identification number to the management apparatus.

12. The electronic settlement method according to any one of claims 7 to 11, further comprising the step of:
encrypting at least the medium identification number of the medium and the device identification number of the device with a private key which is stored in the device, based upon a public key encryption method or a common key encryption method so as to send to the management apparatus from the terminal apparatus.

13. A computer-readable recording medium on which an information processing program for a terminal apparatus is recorded, wherein the information processing program comprises:
a step of reading out a medium identification number from a medium which is assigned a unique medium identification number;
a step of reading out a device identification number from a device which is assigned a unique device identification number; and
a step of sending to a management apparatus which carries out a charge process based upon the medium identification number, at least the medium identification number of the medium and the device identification number of the device for a user identified based on the device identification number.

14. The computer-readable recording medium on which an information processing program for a terminal apparatus is recorded, according to claim 13, wherein
the information processing program further comprises a step of reading out a unique terminal identification number assigned to the main body of a terminal apparatus, and
the step of sending identification numbers comprises a step of sending to the management apparatus the terminal identification number together with at least the medium identification number of the medium and the device identification number of the device.

15. The computer-readable recording medium on which an information processing program for a terminal apparatus is recorded, according to claim 13 or 14, wherein
the medium is a prepaid medium which is purchased by a user, and
the step of sending information to the management apparatus comprises a step of sending at least the medium identification number of the prepaid medium and the device identification number of the device to the management apparatus.

16. The computer-readable recording medium on which an information processing program for a terminal apparatus is recorded, according to claim 15, wherein
the prepaid medium is a prepaid medium that is coated with a coating material, which coats so that a printed portion of at least the medium identification number can be scratched off and that at least the printed portion of the medium identification number before being scratched off can be in a non-visible state, and
the step of sending information to the management apparatus comprises a step of sending the medium identification number which is entered by the user and the device identification number of the device to the management apparatus.

17. The computer-readable recording medium on which an information processing program for the terminal apparatus is recorded, according to claim 15, wherein
the prepaid medium is a recording medium which is stored with the medium identification number, and
the step of sending information to the management apparatus comprises a step of playing back at least the medium identification number which is stored in the recording medium and sending the played back medium identification number together with the device identification number to the management apparatus.

18. The computer-readable recording medium on which an information processing program for a terminal apparatus is recorded, according to any one of claims 13 to 17, wherein
the step of sending information to the management apparatus comprises a step of encrypting at least the medium identification number of the medium and the device identification number of the device with a private key which is stored in the device, based upon a public key encryption method or a common key encryption method and sending to the management apparatus.

19. A computer-readable recording medium. on which an information processing program for a management apparatus is recorded, wherein the information processing program comprises:
a step of receiving at least a medium identification number that is uniquely assigned to a medium, and a device identification number that is uniquely assigned to a device which are to be sent to a terminal apparatus;
a step of identifying a user by referring to a database that is stored with user information which corresponds to at least each device identification number, based upon the device identification number sent from the terminal apparatus; and
a step of carrying out a charge process which is possible with a medium having the medium identification number, for the identified user.

20. The computer-readable recording medium on which an information processing program for a management apparatus is recorded, according to claim 19, wherein
the step of receiving identification numbers comprises a step of receiving a terminal identification number which is uniquely assigned to the main body of a terminal apparatus, together with the medium identification number and the device identification number, and
the step of identifying a user identifies a user by referring to a database that is stored with user information, which corresponds to at least each device identification number and terminal identification number, based upon the device identification number and the terminal identification number.

21. The computer-readable recording medium on which an information processing program for a management apparatus is recorded, according to claim 19 or 20, wherein
the medium is a prepaid medium which is purchased by a user,
the information processing program further comprises a step of controlling the storage of a prepaid amount, which corresponds to the medium identification number of the prepaid medium, in the database by corresponding to the user identified by the device identification number sent from the terminal apparatus, and
the step of carrying out a charge process comprises a step of carrying out a charge process on the identified user's prepaid amount which is stored in the database.

22. The computer-readable recording medium on which an information processing program for a management apparatus is recorded, according to any one of claims 19 to 21, wherein
the information processing program further comprises a step of decoding at least the medium identification number of the medium and the device identification number of the device which are encrypted based upon a public key encryption method or a common key encryption method and sent from the terminal apparatus.

23. An information processing program for a terminal apparatus comprising:
a step of reading out a medium identification number from a medium which is assigned a unique medium identification number;
a step of reading out a device identification number from a device which is assigned a unique device identification number; and
a step of sending to a management apparatus which carries out a charge process based upon the medium identification number, at least the medium identification number of the medium and the device identification number of the device for a user identified based on the device identification number.

24. The information processing program for a terminal apparatus, according to claim 23, further comprising:
a step of reading out a unique terminal identification number assigned to the main body of a terminal apparatus,
wherein the step of sending identification numbers comprises a step of sending to the management apparatus the terminal identification number together with at least the medium identification number of the medium and the device identification number of the device.

25. An information processing program for a management apparatus to be executed by a computer comprising:
a step of receiving at least a medium identification number which is uniquely assigned to a medium, and a device identification number which is uniquely assigned to a device, that are to be sent from a terminal apparatus;
a step of identifying a user by referring to a database that is stored with user information which corresponds to at least each device identification number, based upon the device identification number sent from the terminal apparatus; and
a step of carrying out a charge process which can be possible with a medium having the medium identification number, for the identified user.

26. The information processing program of a management apparatus according to claim 25, wherein
the step of receiving the identification numbers comprises a step of receiving a terminal identification number which is uniquely assigned to the main body of a terminal apparatus, together with the medium identification number and the device identification number, and
the step of identifying a user comprises a step of identifying a user by referring to a database that is stored with user information which corresponds to at least each device identification number and terminal identification number, based upon the device identification number and the terminal identification number.
